# EUROPEAN PATENT APPLICATION

(11) **EP 2 487 075 A1**
(43) Date of publication of application: **15.08.2012**
(21) Application number: 10821984.1
(22) Date of filing: 05.10.2010
(51) Int. Cl.: B60R 21/264, B21D 28/28

(54) **METHOD OF MANUFACTURING PERFORATED PIPE FOR GAS GENERATOR, AS WELL AS GAS GENERATOR**

(30) Priority: 08.10.2009 JP 2009234443
(71) Applicant: Nippon Kayaku Kabushiki Kaisha, Tokyo 102-8172 (JP)
(72) Inventor: ENAMI Koichi, Himeji-shi Hyogo 679-2123 (JP); AOYAGI Satoshi, Himeji-shi Hyogo 679-2123 (JP)
(74) Representative: Winter, Brandl, Fürniss, Hübner, Röss, Kaiser, Polte - Partnerschaft
(86) International application number: PCT/JP2010/067410
(87) International publication number: WO 2011/043314

(57) **Abstract**

Provided is a method of manufacturing a perforated pipe for a gas generator, this perforated pipe being such that even if the inside diameter is 10 mm or less, an opposing pair of holes can be formed easily and with high accuracy. Also provided is a gas generator such that the outside diameter of a tubular housing is reduced, making the entire gas generator compact and lightweight. The aforementioned method of manufacturing a perforated pipe for a gas generator comprises performing a tubular member forming process for forming a closed-end tubular member from a rod-like member by means of press-forming using a rod-like member and a mold which internally has a shape similar to the outer shape of the rod-like member; then performing a hole punching process for forming one or more opposing pairs of holes by inserting a die which has through holes into the aforementioned tubular member in place of the rod-like member, and punching out holes by means of a punching member, in line with the positions of the aforementioned through holes, in the tubular member formed in the aforementioned tubular member forming process. The distance between the holes in each of the aforementioned pairs of holes takes on an unspecified value between 3 mm and 10 mm. The aforementioned gas generator has a perforated pipe that is manufactured by the above method.

## Description

### BACKGROUND OF THE INVENTION

### Field of the Invention

The present invention relates to a method of manufacturing a perforated pipe for a gas generator, the perforated pipe being one of components of the gas generator, and the present invention also relates to a gas generator.

### Description of the Related Art

Up to now, cylinder-type gas generators including a perforated pipe for a gas generator have been known. For example, Japanese Patent Laid-Open No. 2005-231571 discloses a cylinder-type gas generator for an airbag, including: an ignition means chamber accommodating ignition means; and a combustion chamber accommodating a gas generating agent ignited and combusted by the ignition means. The ignition means chamber and the combustion chamber are placed inside of a tubular housing including a gas discharge port in an axial direction thereof. A covering member that covers an entrance of a gas discharge path extending from the combustion chamber to the gas discharge port is placed inside of the combustion chamber. The covering member includes: a ceiling surface, the opposite end to which is opened; and a side surface provided with a plurality of vent holes.

Unfortunately, in Japanese Patent Laid-Open No. 2005-231571, for example, if a covering member (a perforated pipe for a gas generator) having an inside diameter of 10 mm or less is desired to be used, such an excessively small value of the inside diameter makes it difficult to form a pair of opposed holes in the covering member with ease and high accuracy. In addition, what is desired is to achieve a gas generator the entirety of which is further reduced in size and weight by making the outside diameter of the tubular housing smaller.

In view of the above-mentioned problem and circumstance, the present invention has an object to provide: a method of manufacturing a perforated pipe for a gas generator, the method of forming a pair of opposed holes with ease and high accuracy even if the inside diameter of the perforated pipe for a gas generator is 10 mm or less; and a gas generator the entirety of which is further reduced in size and weight by making the outside diameter of a tubular housing smaller than ever before.

### SUMMARY OF THE INVENTION

(1) A method of manufacturing a perforated pipe for a gas generator according to an aspect of the present invention includes: a pipe-like member forming step of forming a closed-bottom pipe-like member from a plate-like member by press-forming using a rod-like member and a mold, the mold having an inner shape substantially similar to an outer shape of the rod-like member; and subsequently to the pipe-like member forming step, a hole punching step of: inserting a die into the pipe-like member in place of the rod-like member, the die having a shape substantially similar to the outer shape of the rod-like member, the die including one or more through holes in a direction intersecting an axial direction thereof; and punching through the pipe-like member formed in the pipe-like member forming step with a punching member aligned with a position of each through hole to form one or more pairs of opposed punch holes. A distance between the paired punch holes is any value selected from 3 mm to 10 mm. With regard to the above description of "the die having an inner shape substantially similar to an outer shape of the rod-like member", the tolerable shape of the rod-like member will be described below. The rod-like member having a shape substantially similar to the inner shape of the mold refers to a member whose shape is similar to or the same as the inner shape of the mold and whose dimensions are - 0.5 mm to -1.5 mm with respect to the inside diameter of the inner shape of the mold, the member including a bottom part whose shape is the same in cross-section as that of the concave part of the inner shape of the mold and whose dimensions are -0.5 mm to 0 mm with respect to the diameter of the bottom part of the inner shape of the mold. Further, the die having a shape substantially similar to the outer shape of the rod-like member refers to a member whose shape is similar to or the same as the shape of the rod-like member and whose dimensions are - 0.5 mm to 0 mm with respect to the diameter of the outer shape of the rod-like member.

According to the configuration in (1) described above, it is possible to provide the method of manufacturing a perforated pipe for a gas generator, the method of forming the pair of opposed punch holes with ease and high accuracy at a time even if the inside diameter of the perforated pipe for a gas generator is as small as 3 mm or more and 10 mm or less. In addition, it is possible to consistently perform the steps of: forming the closed-bottom pipe-like member (a halfway member to be the perforated pipe for a gas generator) from the plate-like member; and then forming the perforated pipe for a gas generator from the closed-bottom pipe-like member. As a result, the perforated pipe for a gas generator can be manufactured more easily than ever before, and the manufacturing cost can be reduced. In addition, because the closed-bottom pipe-like member is fitted to the die in the hole punching step, each position to be punched through by the punch can be determined with reference to the position of the bottom surface of the pipe-like member, as long as the directions of the through holes are known. Note that, in addition to a cylindrical shape, the perforated pipe for a gas generator may have: an angular tubular shape; a conical shape (including shapes whose sides in cross-section are linear, step-like, and wave-like); and a polygonal pyramid shape (including shapes whose sides in cross-section are linear, step-like, and wave-like). In addition, the bottom part of the perforated pipe for a gas generator may have a planar shape and may have a non-planar shape. In addition, in the case where more than one pair of punch holes are formed, the distances between the respective paired punch holes may be constant and may be non-constant.

(2) According to a different point of view, the method of manufacturing a perforated pipe for a gas generator may have the following configuration. That is, the method includes: a pipe-like member forming step of forming a closed-bottom pipe-like member from a plate-like member by press-forming using a rod-like member and a mold, the rod-like member including one or more through holes in a direction intersecting an axial direction thereof, the mold having an inner shape substantially similar to an outer shape of the rod-like member; and subsequently to the pipe-like member forming step, a hole punching step of punching through the pipe-like member formed in the pipe-like member forming step with a punching member aligned with a position of each through hole to form one or more pairs of opposed punch holes. A distance between the paired punch holes is any value selected from 3 mm to 10 mm. With regard to the above description of "the mold having an inner shape substantially similar to an outer shape of the rod-like member", the tolerable shape of the rod-like member will be described below. The rod-like member having a shape substantially similar to the inner shape of the mold refers to a member whose shape is similar to or the same as the inner shape of the mold and whose dimensions are - 0.5 mm to -1.5 mm with respect to the inside diameter of the inner shape of the mold, the member including a bottom part whose shape is the same in cross-section as that of the concave part of the inner shape of the mold and whose dimensions are -0.5 mm to 0 mm with respect to the diameter of the bottom part of the inner shape of the mold.

According to the configuration in (2) described above, it is possible to provide the method of manufacturing a perforated pipe for a gas generator, the method of forming the pair of opposed holes with ease and high accuracy at a time even if the inside diameter of the perforated pipe for a gas generator is as small as 3 mm or more and 10 mm or less. In addition, with the use of only the rod-like member including one or more through holes in the direction intersecting the axial direction thereof, it is possible to consistently perform the steps of: forming the closed-bottom pipe-like member (a halfway member to be the perforated pipe for a gas generator) from the plate-like member; and then forming the perforated pipe for a gas generator from the closed-bottom pipe-like member. As a result, the perforated pipe for a gas generator can be manufactured more easily than ever before, and the manufacturing cost can be reduced. In addition, because the closed-bottom pipe-like member is fitted to the rod-like member, each position to be punched through by the punching member can be determined with reference to the position of the bottom surface of the pipe-like member, as long as the directions of the through holes are known. Note that, in addition to a cylindrical shape, the perforated pipe for a gas generator may have: an angular tubular shape; a conical shape (including shapes whose sides in cross-section are linear, step-like, and wave-like); and a polygonal pyramid shape (including shapes whose sides in cross-section are linear, step-like, and wave-like). In addition, the bottom part of the perforated pipe for a gas generator may have a planar shape and may have a non-planar shape. In addition, in the case where more than one pair of punch holes are formed, the distances between the respective paired punch holes may be constant and may be non-constant.

(3) The method of manufacturing a perforated pipe for a gas generator according to (1) or (2) above may further includes: after the hole punching step, rotating the pipe-like member by a predetermined angle with respect to a central axis of the rod-like member; and punching through the pipe-like member with the punch aligned with the position of each through hole to further form one or more pairs of punch holes. Here, the predetermined angle refers to any angle other than 180° and 360°. Note that specific examples of the predetermined angle include 30°, 45°, 60°, and 90°.

According to the configuration in (3) described above, it is possible to provide the method of easily manufacturing a perforated pipe for a gas generator, the perforated pipe allowing gas to pass therethrough in a plurality of directions via the plurality of holes.

(4) A gas generator according to another aspect of the present invention includes: an elongated tubular metal housing that has a closed bottom and a gas discharge port, and includes a combustion chamber accommodating a gas generating agent; a metal holder that is inserted into an open end of the housing so as to be attached to the housing, and includes a hollow opening part extending in a direction parallel to an axial direction of the housing; an igniter that includes an ignition part accommodating an ignition charge, and is placed in the hollow opening part such that the ignition part is positioned on the combustion chamber side; the combustion chamber that is provided in the housing, and accommodates the gas generating agent ignited and combusted by the igniter; and a perforated pipe for a gas generator that covers an entrance of a gas discharge path extending from the combustion chamber to the gas discharge port, inside of the combustion chamber. The perforated pipe for a gas generator is manufactured through the method of manufacturing a perforated pipe for a gas generator according to any one of (1) to (3) described above.

According to the configuration in (4) described above, it is possible to provide the gas generator the entirety of which is further reduced in size and weight by making the outside diameter of the tubular housing smaller than ever before.

### BRIEF DESCRIPTION OF THE DRAWINGS

FIGS. 1 are views each illustrating an external structure of a gas generator manufactured through a manufacturing method according to an embodiment of the present invention, FIG. 1(a) is a front view, and FIG. 1(b) is a right side view of FIG. 1(a);
FIG. 2 is a view illustrating an internal structure of the gas generator manufactured through the manufacturing method according to the embodiment of the present invention, which is a cross-sectional view taken along a line II-II illustrated in FIG. 1(a) and FIG. 1(b);
FIG. 3 is a perspective view illustrating a structure of a perforated pipe in the gas generator illustrated in FIG. 2;
FIG. 4 is a cross-sectional view for describing the dimensions of the perforated pipe in the gas generator illustrated in FIG. 2;
FIGS. 5 are views each illustrating part of steps in the manufacturing method according to the embodiment of the present invention, in which a perforated-pipe halfway member is shaped in order of FIG. 5(a) to FIG. 5(d);
FIGS. 6 are views each illustrating part of the steps in the manufacturing method according to the embodiment of the present invention, in which punch holes are formed in the perforated-pipe halfway member illustrated in FIG. 5(d) in order of FIG. 6(a) and FIG. 6(b);
FIGS. 7 are views each illustrating part of the steps in the manufacturing method according to the embodiment of the present invention, FIG. 7(a) is a top view illustrating a state where the perforated-pipe halfway member illustrated in FIGS. 5 is rotated by 90° in the counterclockwise direction with respect to the central axis of a rod-like member, and FIG. 7(b) is a top view illustrating a state where another pair of punch holes are further formed after the step of FIG. 7(a); and
FIG. 8(a) is a cross-sectional view illustrating a modified example of the perforated pipe illustrated in FIG. 4, and FIG. 8(b) is a cross-sectional view illustrating another modified example of the perforated pipe illustrated in FIG. 4.

### Reference Signs List

- 10: cylinder-like member
- 10a: caulked part
- 11: gas discharge port
- 12: internal space
- 13, 66a: hollow part
- 14: transfer charge chamber
- 15: combustion chamber
- 16: filter chamber
- 20: base member
- 21: female-connector attachment concave part
- 22: groove part
- 23: caulking/fixing part
- 30: igniter
- 31: ignition part
- 32: terminal pin
- 41: cushion material
- 50: first airtight container
- 51: first cup-like member
- 52: second cup-like member
- 53: transfer charge
- 60: second airtight container
- 61: cup part
- 62: cover part
- 63: gas generating agent
- 64: perforated pipe
- 64a: cylinder-like part
- 64b: bottom part
- 64c: flange part
- 64d: communication hole
- 64e, 64f: scrap
- 65: filter fixing member
- 65a: tubular protruding part
- 65b: annular plate part (flange part)
- 65c: opening part
- 66: filter member
- 100: gas generator
- 110: processing member
- 111: pipe-like member
- 201: mold
- 201a: concave part
- 202: holding member
- 203: rod-like member
- 204a: through hole
- 204: die
- 205: punching member

### DETAILED DESCRIPTION OF THE PREFERRED EMBODIMENTS

Hereinafter, an embodiment of the present invention is described in detail with reference to the drawings. Note that a gas generator according to the embodiment described below is a so-called cylinder-type gas generator incorporated in a side airbag system and the like.

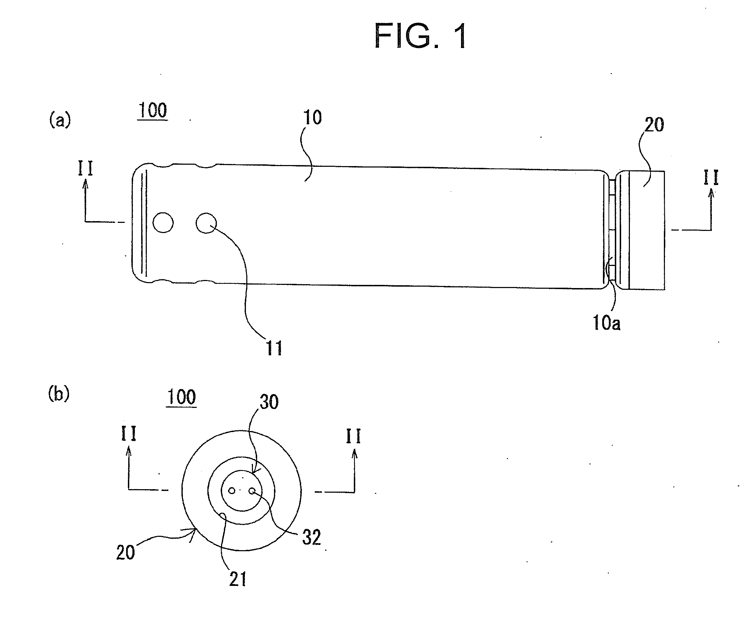

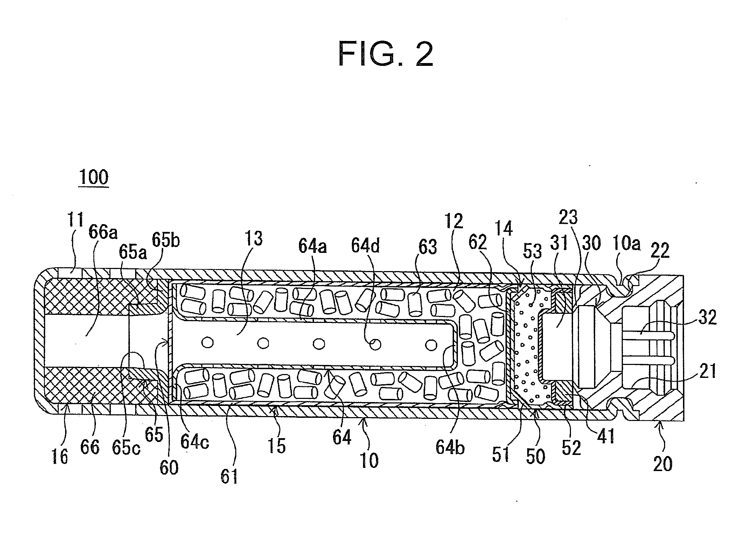

FIGS. 1 are views each illustrating an external structure of the gas generator according to the embodiment of the present invention, FIG. 1(a) is a front view, and FIG. 1(b) is a right side view. In addition, FIG. 2 is a view illustrating an internal structure of the gas generator according to the present embodiment, which is a cross-sectional view taken along a line II-II illustrated in FIG. 1(a) and FIG. 1(b). First, the external structure and the internal structure of the gas generator according to the present embodiment are described with reference to these figures.

As illustrated in FIG. 1(a), FIG. 1(b), and FIG. 2, a gas generator 100 according to the present embodiment has an outer shape that is elongated and substantially columnar, and the outer frame of the gas generator 100 is defined by a cylinder-like member 10 as a housing and a base member 20 as a holder. The cylinder-like member 10 is formed of an elongated member including: a closed bottom part at one end thereof in the axial direction; and an opening at another end thereof in the axial direction. The base member 20 is formed of a tubular member that extends in a direction parallel to the axial direction of the cylinder-like member 10 and includes a hollow opening part, and the base member 20 includes a groove part for fixing by caulking to be described later, at a predetermined position on the outer periphery thereof.

The base member 20 is attached to the cylinder-like member 10 such that part of the base member 20 is inserted into the open end of the cylinder-like member 10, that is, the open end of the closed-bottom elongated cylindrical housing.

The cylinder-like member 10 and the base member 20 are both made of metal such as stainless steel, iron steel, an aluminum alloy, and a stainless steel alloy, and are coupled and fixed to each other by caulking. Specifically, in the state where part of the base member 20 is inserted into the open end of the cylinder-like member 10, the outer peripheral wall of the cylinder-like member 10 is caulked inward in the radial direction at a portion corresponding to the groove part 22 provided on the outer periphery of the base member 20, whereby a caulked part 10a is formed. In this way, the base member 20 is fixed to the cylinder-like member 10.

As illustrated in FIG. 1(a) and FIG. 2, a plurality of gas discharge ports 11 are provided near the bottom part of the cylinder-like member 10. There are more than one gas discharge ports 11 for jetting gas generated inside of the gas generator 100 to the outside. The gas discharge ports 11 are provided along the circumferential direction and the axial direction of the cylinder-like member 10.

As illustrated in FIG. 2, a transfer charge chamber 14, a combustion chamber 15, and a filter chamber 16 are provided in an internal space of the gas generator 100, the internal space being defined by the housing formed of the cylinder-like member 10 and the holder formed of the base member 20.

The transfer charge chamber 14 is defined mainly by the cylinder-like member 10, the base member 20, an igniter (squib) 30 to be described later, and a second airtight container 60 to be described later, and the transfer charge chamber 14 is provided in a portion close to the open end of the cylinder-like member 10 (a right portion in FIG. 2). In addition, a first airtight container 50 and a cushion material 41 to be described below are arranged in the transfer charge chamber 14. That is, the igniter (squib) 30 is fixed by caulking in the hollow opening part of the base member 20, and the cushion material 41 is positioned so as to be in contact with the leading end part of a caulking/fixing part 23 of the base member 20 and to surround the periphery of a cup-like ignition part 31 of the igniter 30. In addition, the first airtight container 50 is fixed to the leading end part of the ignition part 31 by the cushion material 41. Note that the first airtight container 50 includes: a first cup-like member 51 having a closed bottom and a tubular shape; a second cup-like member 52 that is fixed to the ignition part 31 by the cushion material 41 and has a closed bottom and a tubular shape; and a transfer charge (enhancer) 53 accommodated in the internal space between the first cup-like member 51 and the second cup-like member. The detailed structure around the transfer charge chamber 14 is described later.

Note that the groove part 22 is provided on the outer periphery of the base member 20 (that is, the surface thereof in contact with the inner periphery of the cylinder-like member 10) so as to extend in the circumferential direction, and the caulked part 10a, which is formed by caulking part of the cylinder-like member 10, is provided in the groove part 22. The caulked part 10a serves to fix the cylinder-like member 10 to the base member 20, and thus can secure the airtightness between the outside of the gas generator 100 and the transfer charge chamber 14. In addition, the base member 20 is fixed to the igniter 30 by the caulking/fixing part 23.

Note that, if a liquid sealing agent is additionally applied to at least any one of the outer surface of the groove part 22 and the inner surface of the caulked part 10a, the airtightness therebetween can be obtained.

The cushion material 41 is placed between the first airtight container 50 and the base member 20 and in a space around the ignition part 31 of the igniter 30. Note that the cushion material 41 is a member for fixing various internal components (such as the igniter 30 and the first airtight container 50) to be described later in the housing axial direction inside of the housing, as well as a member for absorbing variations in the lengths of the internal components in the housing axial direction. Accordingly, the cushion material 41 is sandwiched and fixed between the first airtight container 50 and the base member 20 in the housing axial direction. In addition, the cushion material 41 is formed of, for example, a shaped body of ceramic fibers or a shaped body of silicone foam.

The igniter 30 is an ignition device for making a flame, and includes the ignition part 31 and terminal pins 32. The ignition part 31 includes: an ignition charge (not illustrated) that ignites therein at the time of operation; and a resistor (not illustrated) for combusting the ignition charge. The terminal pins 32 are connected to the ignition part 31 in order to ignite the ignition charge. More specifically, the igniter 30 includes: a base through which the pair of terminal pins 32 are inserted to be held; and a squib cup attached to the base. The resistor (bridge wire) is attached so as to connect the leading ends of the terminal pins 32 inserted into the squib cup to each other, and the ignition charge fills the squib cup so as to surround the resistor or to be in contact with the resistor. The resistor is generally made of a nichrome wire, and the ignition charge is generally made of ZPP (zirconium - potassium perchlorate), ZWPP (zirconium - tungsten - potassium perchlorate), or lead tricinate. The squib cup is generally made of metal or plastics.

In the igniter 30, if collision detecting means (not illustrated) provided separately in a vehicle detects a collision against an object, a predetermined amount of current flows through the resistor via the terminal pins 32. When the predetermined amount of current flows through the resistor, Joule heat is generated in the resistor, and the ignition charge receives the generated heat to start combusting. A high-temperature flame generated by the combustion explodes the squib cup (ignition part 31) accommodating the ignition charge.

The transfer charge 53 is ignited by the flame generated as a result of the operation of the igniter 30, and thus combusts to generate thermal particles. The transfer charge 53 needs to be capable of reliably starting the combustion of a gas generating agent 63 to be described later, and hence the transfer charge 53 is generally made of a composition of metal powder/oxidant, as typified by B/KNO₃. The transfer charge 53 is used in the form of power, or is formed for use into a predetermined shape using a binder. The transfer charge can be formed for use into various shapes using the binder, for example, a granular shape, a columnar shape, a sheet-like shape, a spherical shape, a uniforate cylindrical shape, a porous cylindrical shape, and a tablet-like shape.

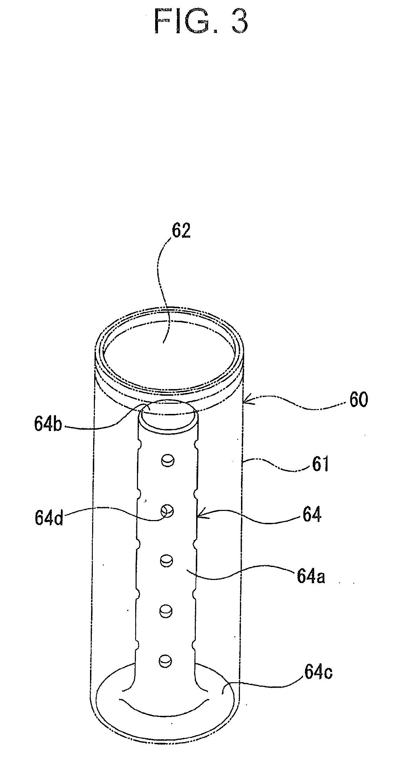

The combustion chamber 15 is defined by the first airtight container 50 and a filter fixing member 65 to be described later, and is provided in substantially the center of the housing, that is, substantially the center of the cylinder-like member 10. The second airtight container 60 is accommodated in the combustion chamber 15. As illustrated in FIG. 2 and FIG. 3, the second airtight container 60 includes: a closed-bottom tubular cup part 61 including an opening part at one end thereof; a cover part 62 that closes the opening part of the cup part 61; a perforated pipe 64 accommodated in the cup part 61; and the gas generating agent 63 accommodated in an internal space 12 between the cup part 61 and the perforated pipe 64. As illustrated in FIG. 2 and FIG. 3, the perforated pipe 64 includes: a cylinder-like part 64a provided with a plurality of communication holes 64d; a bottom part 64b formed at one end of the cylinder-like part 64a; and a flange part 64c formed at another end of the cylinder-like part 64a. Note that the perforated pipe 64 is arranged such that the flange part 64c is in contact with the bottom part of the cup part 61 on the filter fixing member 65 side. Note that the second airtight container 60 is generally made of metal such as stainless steel, iron steel, aluminum, and an aluminum alloy.

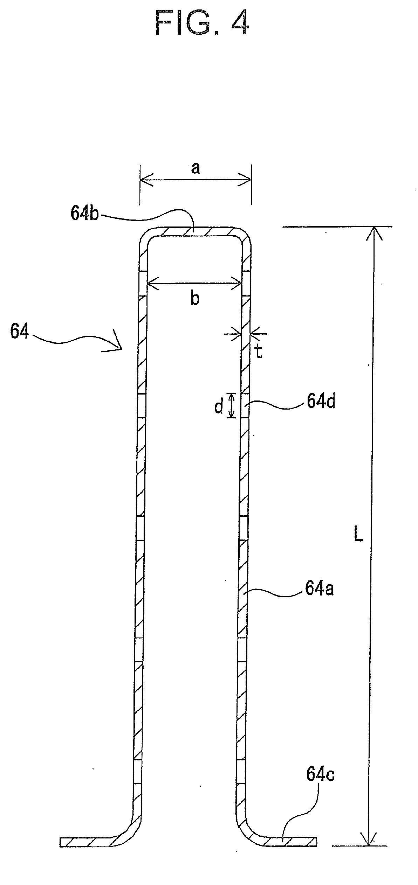

Here, the dimensions of the perforated pipe 64 are described with reference to FIG. 4. The perforated pipe 64 is sized to have the following dimensions: a length L is any value selected from 10 mm to 100 mm (preferably, from 10 mm to 80 mm), a thickness t is any value selected from 0.2 mm to 1.0 mm (preferably, from 0.3 mm to 0.6 mm), an outside diameter a is any value selected from 3.2 mm to 11.0 mm, an inside diameter (the distance between the paired communication holes 64d in the radial direction) b is any value selected from 3 mm to 10 mm (preferably, from 4 mm to 7 mm), and a hole diameter d of each communication hole 64d is any value selected from 1.0 mm to 4.0 mm (preferably, from 1.5 mm to 2.5 mm).

The gas generating agent 63 is ignited by the thermal particles generated as a result of the combustion of the transfer charge 53 ignited by the igniter 30, and thus combusts to generate gas. The gas generating agent 63 is generally formed of a shaped body containing a fuel, an oxidant, and an additive. Examples of the fuel to be used include a triazole derivative, a tetrazole derivative, a guanidine derivative, an azodicarbonamide derivative, a hydrazine derivative, and a combination of these derivatives. Specifically, preferable examples of the fuel to be used include nitroguanidine, guanidine nitrate, cyanoguanidine, and 5-aminotetrazole. In addition, examples of the oxidant to be used include nitrate and perchlorate containing cations selected from alkali metal, alkaline earth metal, transition metal, and ammonia. Preferable examples of the nitrate to be used include sodium nitrate, potassium nitrate, strontium nitrate, and basic copper nitrate. Preferable examples of the perchlorate to be used include potassium perchlorate and ammonium perchlorate. In addition, examples of the additive to be used include a binder, a slag forming agent, and a combustion adjusting agent. Preferable examples of the binder to be used include: an organic binder of metallic salt of carboxymethylcellulose; and an inorganic binder of synthetic hydroxytalcite or an acid clay. Preferable examples of the slag forming agent to be used include silicon nitride and silica. In addition, preferable examples of the combustion adjusting agent to be used include a metal oxide, ferrosilicon, activated carbon, and graphite.

The shaped body of the gas generating agent 63 can have various shapes such as a granular shape, a pellet-like shape, a columnar shape, and a disk-like shape. The gas generating agent 63 can also have a perforated shaped body with holes inside thereof (for example, a uniforate cylindrical shape or a porous cylindrical shape). It is preferable to select as appropriate these shapes in accordance with the specifications of the airbag system in which the gas generator 100 is incorporated. Specifically, it is preferable to select an optimal shape in accordance with the specifications, for example, select the shape in which the gas generation rate temporally changes during the combustion of the gas generating agent 63. In addition, it is preferable to select as appropriate the size and filling amount of the shaped body in consideration of the linear combustion rate and pressure index of the gas generating agent 63 as well as the shape of the gas generating agent 63.

The filter fixing member 65 divides the combustion chamber 15 and the filter chamber 16 from each other, and fixes a filter member 66 to be described later, together with the inner wall of the cylinder-like member 10. The filter fixing member 65 includes: a tubular protruding part 65a including an opening part 65c that communicates the combustion chamber 15 with the filter chamber 16 during the operation of the gas generator 100; and an annular plate part (flange part) 65b provided at one end of the tubular protruding part 65a, and the filter fixing member 65 serves as an entrance of a gas discharge path extending from the combustion chamber 15 to the gas discharge ports 11.

The filter chamber 16 is defined by the cylinder-like member 10 and the filter fixing member 65, and is provided in a portion close to one end of the cylinder-like member 10, that is, a portion close to the bottom part of the housing (a left portion of FIG. 2). The cylindrical filter member 66 is accommodated in the filter chamber 16. In addition, the filter chamber 16 is communicated with the outside via the gas discharge ports 11 provided in the peripheral wall of the cylinder-like member 10.

Examples of the filter member 66 to be used include: a member formed by winding a wire rod or a net material made of metal such as stainless steel and iron steel; and a member formed by pressing together into a solid shape. Specifically, a knitted wire net, a plain-woven wire net, and an aggregation of crimped metal wire rods are used for the filter member 66. The filter member 66 functions as cooling means for cooling gas generated in the combustion chamber 15 by taking high-temperature heat from the gas while the gas passes through the filter member 66, and also functions as removing means for removing residues (slag) and the like contained in the gas. Note that it is preferable to use a member including a hollow part 66a formed therein for the filter member 66, the hollow part 66a extending in a direction parallel to the axial direction of the housing. This can suppress the gas flow resistance to be low and achieve an efficient gas flow.

Note that a female-connector attachment concave part 21 to which a female connector (not illustrated) can be attached is formed at the end part of the gas generator 100 at which the base member 20 is placed. Note that the female connector is a portion to which a male connector of a harness is connected, the harness transmitting a signal from a collision detecting sensor provided separately from the gas generator 100. A shorting clip (not illustrated) is attached to the female connector as needed. The shorting clip is attached in order to prevent the gas generator 100 from malfunctioning due to electrostatic discharge or the like during the transport or the like of the gas generator 100. The male connector of the harness is inserted into the female connector at the time of the incorporation of the gas generator 100 into the airbag system, whereby the contact of the shorting clip with the terminal pins 32 is cancelled.

Next, the behavior during the operation of the gas generator 100 described above is described. In case of a collision of the vehicle on which the airbag system including the gas generator 100 according to the present embodiment is mounted, the collision is detected by the collision detecting means provided separately in the vehicle, and the igniter 30 is operated upon the detection. When the igniter 30 is operated, the pressure inside of the ignition part 31 is increased by the combustion of the ignition charge, the ignition part 31 explodes accordingly, and the flame flows to the outside of the ignition part 31. The transfer charge 53 accommodated in the transfer charge chamber 14 is ignited by the flame generated as a result of the operation of the igniter 30, and thus combusts to generate a large number of thermal particles. The pressure inside of the first airtight container 50 is increased by the combustion of the transfer charge 53, the first cup-like member 51 explodes accordingly, and the thermal particles reach the cover part 62 of the second airtight container 60. The thermal particles that have reached the cover part 62 explode the cover part 62 to open or split the cover part 62, so that the thermal particles flow into the internal space 12 to reach the gas generating agent 63.

The gas generating agent 63 is ignited by the flowing-in thermal particles, and thus combusts to generate a large amount of gas. The pressure inside of the internal space 12 is increased by the combustion of the gas generating agent 63, and the generated gas flows into a hollow part 13 of the perforated pipe 64 through the plurality of communication holes 64d. Then, the pressure inside of the hollow part 13 is also increased, the bottom part of the second airtight container 60 on the filter fixing member 65 side explodes accordingly, and the gas flows into the hollow part 66a of the filter member 66 in the filter chamber 16 through the opening part 65c of the filter fixing member 65. Then, the flowing-in gas is cooled to a predetermined temperature while passing through the filter member 66, and is jetted to the outside of the housing from the gas discharge ports 11. The gas jetted from the gas discharge ports 11 is guided to the inside of an airbag (not illustrated), and thus inflates and expands the airbag.

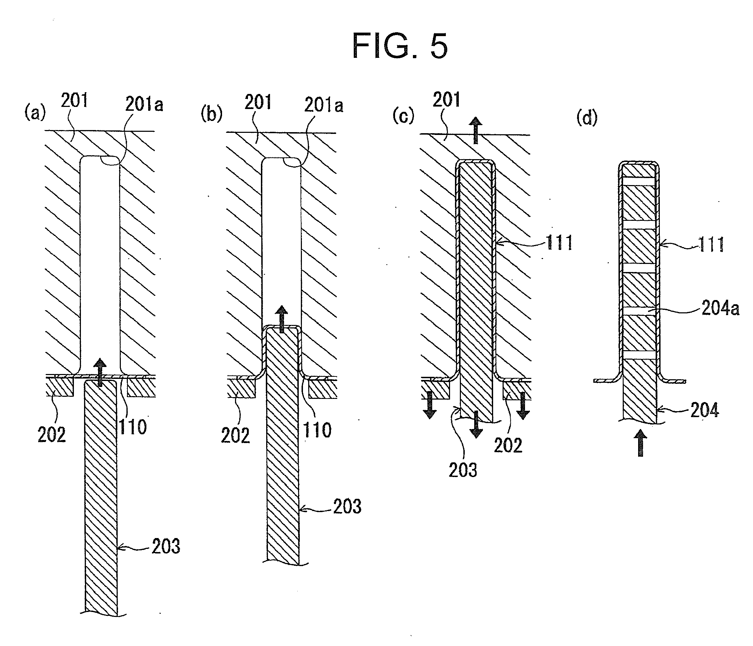

Next, a method of manufacturing the perforated pipe 64 for the gas generator 100 is described with reference to FIGS. 5 to FIGS. 7.

First, press-forming (deep-draw forming) is performed using: a mold 201 including a concave part 201a with a columnar space; and a ring-like holding member 202. Specifically, as illustrated in FIG. 5(a), a central part of a disk-like processing member 110 is positioned at the center of an opening part of the concave part 201a, and an end part of the processing member 110 is sandwiched and held between an end part of the mold 201 and the holding member 202. Next, a rod-like member 203 is pressed for the deep-draw forming in the depth direction (an arrow direction in FIG. 5(a)) of the concave part 201a, and a concave part is formed in the central part of the processing member 110 (see FIGS. 5(a) and 5(b)). The rod-like member 203 is further pressed in the depth direction (the arrow direction in FIG. 5(a)) of the concave part 201a, and as illustrated in FIG. 5(c), a closed-bottom pipe-like member 111 (a halfway member to be the perforated pipe 64) including a flange part in the opening part thereof is formed (pipe-like member forming step).

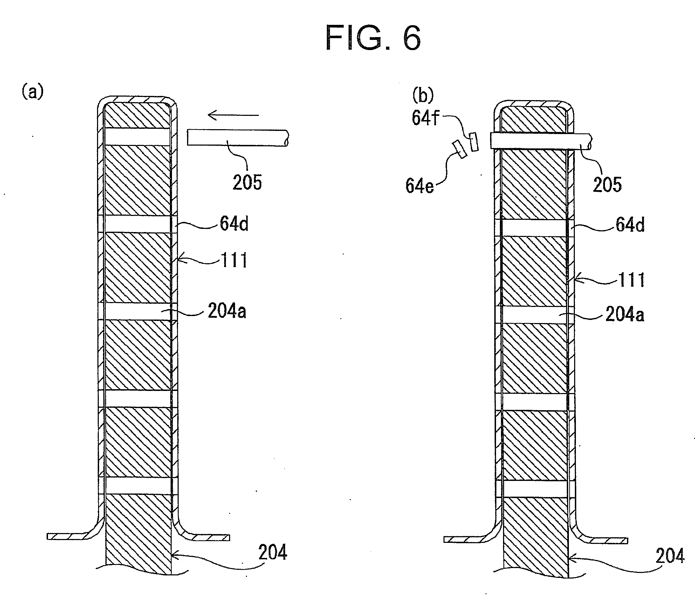

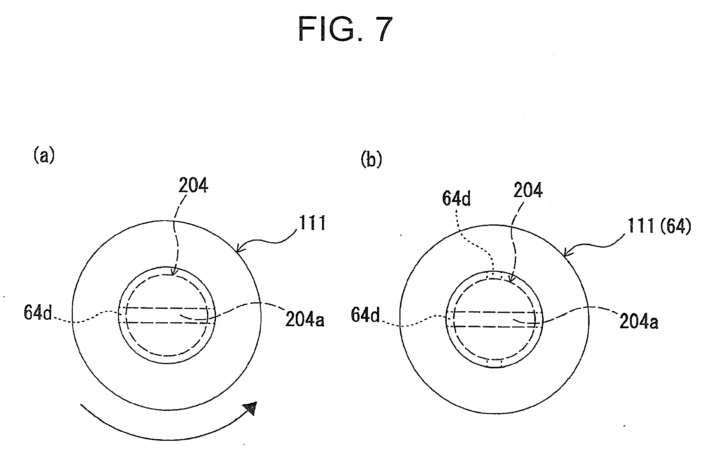

After the pipe-like member 111 illustrated in FIG. 5(c) is formed as described above, the mold 201, the holding member 202, and the rod-like member 203 are removed in respective arrow directions illustrated in FIG. 5(c). After that, in an arrow direction in FIG. 5(d), a die 204, which is a rod-like member having substantially the same outer shape as that of the rod-like member 203, is inserted to the bottom of the pipe-like member 111. Note that the die 204 includes a plurality of through holes 204a that are arranged in parallel to one another in a direction substantially perpendicular to the length direction thereof, and the die 204 has the outer shape similar to the inner shape of the concave part 201a. Next, the position of a punching member 205 is adjusted to coincide with each position of through holes 204a of the die 204, and the punching member 205 is moved so as to pierce each through hole 204a, whereby the pipe-like member 111 is punched through. Then, scraps 64e and 64f (see FIG. 6(b)) are removed, and pairs of punch holes (the pairs of communication holes 64d) are formed. FIGS. 6(a) and 6(b) illustrate an example state where the pairs of punch holes (the pairs of communication holes 64d) are formed. Subsequently, the pipe-like member 111 is rotated by 90° in an arrow direction in FIG. 7(a) with respect to the central axis of the die 204. Similarly to the steps illustrated in FIGS. 6, the position of the punching member 205 is adjusted to coincide with the position of each through hole 204a, the pipe-like member 111 is punched through by the punching member 205, and pairs of punch holes (the pairs of communication holes 64d) are further formed (see FIG. 7(b)) (hole punching step). After that, the die 204 is pulled out of the pipe-like member 111 (perforated pipe 64). Through such a series of steps as described above, the perforated pipe 64 illustrated in FIG. 2 to FIG. 4 is completed.

Note that the perforated pipe 64 having the above-mentioned dimensions can be obtained by changing as appropriate the sizes, lengths, and the like of the concave part 201a and the rod-like member in accordance with desired dimensions of the perforated pipe 64.

With the adoption of the configuration described above, it is possible to provide the method of manufacturing the perforated pipe 64 for the gas generator, the method of forming the pair of punch holes (the pair of communication holes 64d) opposed to each other in the radial direction with ease and high accuracy at a time even if the inside diameter of the perforated pipe 64 is 3 mm or more and 10 mm or less. In addition, it is possible to consistently perform the steps of: forming the closed-bottom pipe-like member 111 (the halfway member to be the perforated pipe 64) from the processing member 110 as illustrated in FIG. 5(a); and then forming the perforated pipe 64 from the pipe-like member 111. As a result, the perforated pipe 64 for the gas generator can be manufactured more easily than ever before, and the manufacturing cost can be reduced.

In addition, according to the configuration described above, it is possible to provide the method of easily manufacturing the perforated pipe 64 for the gas generator, the perforated pipe 64 allowing the gas to flow thereinto in two directions via the plurality of communication holes 64d and pass therethrough.

In addition, it is possible to provide the gas generator 100 the entirety of which is further reduced in size and weight by making the outside diameter of the tubular housing (cylinder-like member 10) smaller than ever before.

### <Modified Examples>

Note that the design of the present invention can be changed within a range not departing from the scope of the claims, and hence the present invention is not limited to the above-mentioned embodiment. For example, because the closed-bottom pipe-like member 111 is fitted to the die 204, each position to be punched through by the punching member 205 can be determined with reference to the position of the bottom surface of the pipe-like member 111 (the inner surface of the bottom part 64b), as long as the directions of the communication holes 64d are known. In addition, marks indicating the positions of the communication holes 64d may be given in advance to a visible part of the die 204 (a portion thereof outside of the pipe-like member 111), leading to easier determination of the positions of the communication holes 64d. In addition, with the use of the die 204 instead of the rod-like member 203 from the beginning of the pipe-like member forming step described above, the pipe-like member 111 may be formed by deep drawing from the plate-like member 110.

In addition to a cylindrical shape, the perforated pipe 64 may have: an angular tubular shape; and a shape in which the distances between the respective paired communication holes (punch holes) are non-constant (for example, a conical shape (including shapes whose sides in cross-section are linear, step-like, and wave-like); and a polygonal pyramid shape (including shapes whose sides in cross-section are linear, step-like, and wave-like)). Accordingly, the shapes of the mold 201, the rod-like member 203, and the die 204 may be selected as appropriate in accordance with a desired shape of the perforated pipe 64.

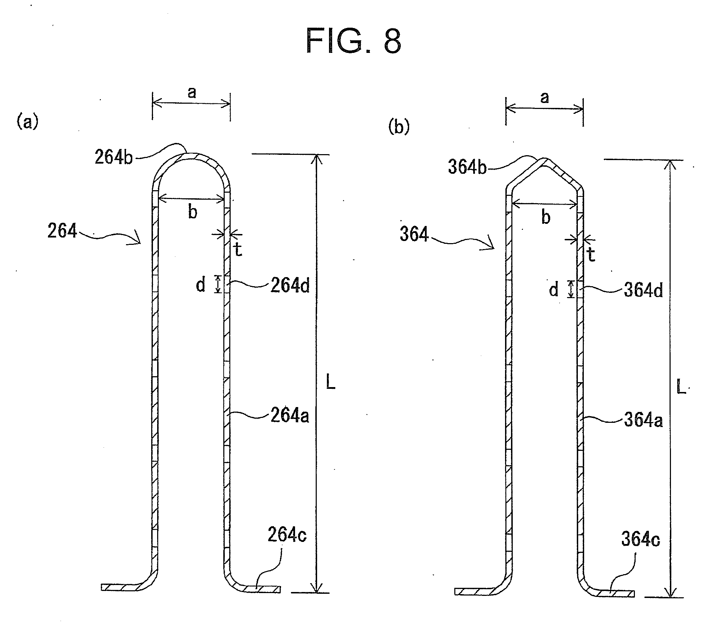

In addition, in the above-mentioned embodiment, the bottom part of the perforated pipe 64 has a planar shape, but may have a non-planar shape (for example, a hemispherical shape (including shapes in cross-section that are a half of a perfect circle, ellipsoidal, step-like, wave-like, and domical); a conical shape (including shapes whose sides in cross-section are linear, step-like, and wave-like); and a polygonal pyramid shape (including shapes whose sides in cross-section are linear, step-like, and wave-like)). Here, FIG. 8(a) illustrates a perforated pipe 264 as an example of the perforated pipe whose bottom part has the hemispherical shape. In addition, FIG. 8(b) illustrates a perforated pipe 364 as an example of the perforated pipe whose bottom part has the conical shape. In addition, FIGS. 8(a) and 8(b) each illustrate the length L, the thickness t, the outside diameter a, the inside diameter (the distance between the paired communication holes in the radial direction) b, and the hole diameter d of each communication hole, as the respective dimensions of the perforated pipes 264 and 364, and the ranges of these values are the same as those described above in the embodiment. Note that portions 264a, 264c, and 264d in FIG. 8(a) are respectively the same as the portions 64a, 64c, and 64d described above in the embodiment, and hence description thereof is omitted. Similarly, portions 364a, 364c, and 364d in FIG. 8(b) are respectively the same as the portions 64a, 64c, and 64d described above in the embodiment, and hence description thereof is omitted.

In addition, an air vent hole may be provided in the deepest part of the concave part 201a of the mold 201 used in the press-forming (deep-draw forming) according to the above-mentioned manufacturing process. The air vent hole facilitates the press-forming.

In addition, in the above-mentioned manufacturing process, after the pairs of punch holes (the pairs of communication holes 64d) are formed as illustrated in FIGS. 6(a) and 6(b), the pipe-like member 111 is rotated by 90° in the arrow direction in FIG. 7(a) with respect to the central axis of the die 204, and the pairs of punch holes (the pairs of communication holes 64d) are further formed similarly to the steps illustrated in FIGS. 6. Alternatively, instead of the rotation by 90°, the pipe-like member 111 may be rotated by a desired angle other than 180° and 360°, and one or more pairs of punch holes (one or more pairs of communication holes 64d) may be further formed as appropriate in the pipe-like member 111.

In addition, in the above-mentioned manufacturing process, the perforated pipe 64 is formed from the processing member 110. Alternatively, if the pipe-like member 111 is formed from the beginning, the manufacturing process may begin with the step of fitting the pipe-like member 111 to the die 204 as illustrated in FIG. 5(d) (fitting step). Subsequently to the fitting step, as illustrated in FIGS. 6 and FIGS. 7, the position of the punching member 205 may be adjusted to coincide with the position of each through hole 204a, the pipe-like member 111 may be punched through by the punching member 205, and the pairs of opposed punch holes (the pairs of opposed communication holes 64d) may be formed (hole punching step). Through these steps, it is possible to provide the method of manufacturing the perforated pipe 64 for the gas generator, the method of forming the pair of opposed punch holes (the pair of opposed communication holes 64d) with ease and high accuracy even if the inside diameter of the perforated pipe 64 is 3 mm or more and 10 mm or less.

In addition, in the manufacturing process according to each of the above-mentioned embodiment and modified examples, the die 204 used includes the through holes 204a in the direction substantially perpendicular to the axial direction. Alternatively, a rod-like die including one or more through holes in a direction intersecting the axial direction may be used instead of the die 204. This also enables easy formation of one or more pairs of punch holes.

In addition, in the pipe-like member forming step, the fitting step, and the hole punching step according to each of the above-mentioned embodiment and modified examples, the processing member 110 is pressed into the concave part 201a of the mold 201 by moving the rod-like member 203 or the die 204 upward from below. The positional relation of the mold 201 to the rod-like member 203 and the die 204 may be changed as appropriate to perform the respective steps. For example, (1) the position of the mold 201 and the positions of the rod-like member 203 and the die 204 are reversed, (2) these components are laid on their sides to be horizontal, and (3) these components are placed obliquely.

In addition, the configurations according to the above-mentioned embodiment and modified examples may be combined with one another as appropriate, to thereby achieve the method of manufacturing the perforated pipe for the gas generator, as well as the gas generator.

## Claims

1. A method of manufacturing a perforated pipe for a gas generator, comprising:
a pipe-like member forming step of forming a closed-bottom pipe-like member from a plate-like member by press-forming using a rod-like member and a mold, the mold having an inner shape substantially similar to an outer shape of the rod-like member; and
subsequently to the pipe-like member forming step, a hole punching step of: inserting a die into the pipe-like member in place of the rod-like member, the die having a shape substantially similar to the outer shape of the rod-like member, the die including one or more through holes in a direction intersecting an axial direction thereof; and punching through the pipe-like member formed in the pipe-like member forming step with a punching member aligned with a position of each through hole to form one or more pairs of opposed punch holes, wherein
a distance between the paired punch holes is any value selected from 3 mm to 10 mm.

2. A method of manufacturing a perforated pipe for a gas generator, comprising:
a pipe-like member forming step of forming a closed-bottom pipe-like member from a plate-like member by press-forming using a rod-like member and a mold, the rod-like member including one or more through holes in a direction intersecting an axial direction thereof, the mold having an inner shape substantially similar to an outer shape of the rod-like member; and
subsequently to the pipe-like member forming step, a hole punching step of punching through the pipe-like member formed in the pipe-like member forming step with a punching member aligned with a position of each through hole to form one or more pairs of opposed punch holes, wherein
a distance between the paired punch holes is any value selected from 3 mm to 10 mm.

3. The method of manufacturing a perforated pipe for a gas generator according to claim 1 or 2, further comprising: after the hole punching step, rotating the pipe-like member by a predetermined angle with respect to a central axis of the rod-like member; and punching through the pipe-like member with the punching member aligned with the position of each through hole to further form one or more pairs of punch holes.

4. A gas generator comprising:
an elongated cylindrical metal housing that has a closed bottom and a gas discharge port, and includes a combustion chamber accommodating a gas generating agent;
a metal holder that is inserted into an open end of the housing so as to be attached to the housing, and includes a hollow opening part extending in a direction parallel to an axial direction of the housing;
an igniter that includes an ignition part accommodating an ignition charge, and is placed in the hollow opening part such that the ignition part is positioned on the combustion chamber side;
the combustion chamber that is provided in the housing, and accommodates the gas generating agent ignited and combusted by the igniter; and
a perforated pipe for a gas generator that covers an entrance of a gas discharge path extending from the combustion chamber to the gas discharge port, inside of the combustion chamber, wherein
the perforated pipe for a gas generator is manufactured through the method of manufacturing a perforated pipe for a gas generator according to any one of claims 1 to 3.
